# EUROPÄISCHE PATENTSCHRIFT

(11) **EP 2 234 907 B1**
(45) Veröffentlichungstag und Bekanntmachung des Hinweises auf die Patenterteilung: **14.11.2012**
(21) Anmeldenummer: 09704810.2
(22) Anmeldetag: 20.01.2009
(51) Int. Cl.: B65G 47/244, B05B 13/02

(54) **VORRICHTUNG ZUR BEHANDLUNG VON WERKSTÜCKEN, INSBESONDERE VON FAHRZEUGRÄDERN, INSBESONDERE IM RAHMEN EINER PULVERLACKIERUNG**
DEVICE FOR PROCESSING WORKPIECES, IN PARTICULAR VEHICLE WHEELS, IN PARTICULAR AS PART OF A POWDER COATING STEP
DISPOSITIF DE TRAITEMENT DE PIÈCES, EN PARTICULIER DE ROUES DE VÉHICULE, NOTAMMENT DANS LE CADRE D'UNE PEINTURE PAR POUDRAGE

(30) Priorität: 26.01.2008 DE 102008006171
(43) Veröffentlichungstag der Anmeldung: 06.10.2010
(73) Patentinhaber: Eisenmann AG, 71032 Böblingen (DE)
(72) Erfinder: NOTHUM, Stefan, 71154 Nufringen (DE)
(74) Vertreter: Ostertag, Ulrich
(86) Internationale Anmeldenummer: PCT/EP2009/000322
(87) Internationale Veröffentlichungsnummer: WO 2009/092561

(56) Entgegenhaltungen:
- EP-A- 1 413 367
- EP-A- 1 767 473

## Beschreibung

Die Erfindung betrifft eine Vorrichtung zur Behandlung von Werkstücken, insbesondere Fahrzeugrädern, insbesondere im Rahmen einer Pulverlackierung, mit einem Förderer, welcher die Werkstücke entlang eines Bewegungsweges durch die Vorrichtung führt und ein sich bewegendes Förderorgan umfasst, wobei die Werkstücke auf spindelförmigen Elementen anordenbar sind, die an dem Förderorgan befestigt und mittels einer Dreheinrichtung um ihre eigene Spindeldrehachse drehbar sind.

Aus der DE 102 49 999 B3, die den Oberbegriff Anspruchs 1 offenbart, ist eine derartige Vorrichtung zum Absaugen bestimmter Flächenbereiche an bepulverten Fahrzeugrädern bekannt. Diese umfasst einen Förderer, welcher die Fahrzeugräder entlang eines Bewegungsweges durch die Vorrichtung führt. Die Fahrzeugräder sind auf Spindeln auflegbar, die an einem sich bewegenden Förderorgan des Förderers befestigt und um ihre eigene Achse drehbar sind.

Zum Drehen von Spindeln dieser Art sind Drehstationen in Form von formschlüssigen Trieben, beispielsweise Kettentrieben, bekannt, bei denen die Spindeln jeweils eine Kettenradscheibe besitzen, die in eine Kette der Drehstation eintaucht. Das Eintauchen des Kettenrades in die Kette ist allerdings stark verschleißbehaftet. Außerdem führen harte Übergänge beim Eintauchen des Kettenrades in die Kette zu einer Stoßbelastung des Förderers und der auf den Spindeln gelagerten Werkstücke, insbesondere der Fahrzeugräder. Ferner begrenzt der Eintauchvorgang der Kettenräder in die Kette realisierbare Spindeldrehzahlen auf kleine Werte zwischen 0 U/min bis etwa 35 U/min. Darüber hinaus sind solche Drehstationen wartungsintensiv, insbesondere sind eine Schmierung der Kette und der wiederkehrende Austausch verschlissener Ketten erforderlich. Im Übrigen sind Drehrichtungs- oder Drehzahlwechsel, wenn überhaupt möglich, schwierig zu gestalten und aufwendig. In kritischen Einsatzbereichen, in denen beispielsweise Sonderschutzmaßnahmen in Bezug auf Gas- und/oder Staubexplosionen zur Anwendung kommen (Explosions-geschützte Bereiche), ist dies nahezu unmöglich zu realisieren.

Aufgabe der vorliegenden Erfindung ist, eine Vorrichtung der eingangs genannten Art zu gestalten, bei der die Beförderung und Drehung der Werkstücke technisch einfach und zuverlässig realisierbar ist.

Diese Aufgabe wird erfindungsgemäß dadurch gelöst, dass
a) die spindelförmigen Elemente jeweils wenigstens einen Spindelreibkörper mit einer zur Spindeldrehachse rotationssymmetrischen Spindelreibfläche aufweisen;
b) die Dreheinrichtung wenigstens einen Antriebsreibkörper mit einer rotationssymmetrischen Antriebsreibfläche umfasst, der um seine nicht mit der Spindeldrehachse zusammenfallenden Symmetrieachse der Antriebsreibfläche motorisch drehbar angeordnet ist, wobei die Antriebsreibfläche lokal an der Spindelreibfläche unter Reibungskontakt anliegt.

Erfindungsgemäß erfolgt also der Drehantrieb der Werkstücke, im Gegensatz zu den bekannten Antrieben, ohne dass vorspringende Teile der Dreheinrichtung und der spindelförmigen Elemente mit harten Übergängen ineinander eingreifen, nur über einen Reibungskontakt. Auf diese Weise ist der Antrieb verschleißarm, so dass auch der Wartungsaufwand außerordentlich gering ist. Je größer die Radien des Spindelreibkörpers und des Antriebsreibkörpers dabei sind, desto kleiner sind die benötigten Kräfte und damit der Verschleiß, der über den Reibungskontakt auftritt. Im Übrigen sind die Drehgeschwindigkeiten bei einem Reibungskontakt innerhalb weiter Grenzen beliebig steuer- und regelbar, so dass Drehrichtungswechsel und Drehzahländerungen problemlos ausführbar sind. Außerdem sind weitaus größere Spindeldrehzahlen als beim Einsatz von formschlüssigen Trieben realisierbar. Sowohl das Einfahren der spindelförmigen Elemente in die Dreheinrichtung als auch ein Wechsel von Drehstation zu Drehstation kann sehr weich ablaufen, so dass die Dreheinrichtung, der Förderer und die Werkstücke keiner Stoßbelastungen ausgesetzt sind. Ferner ist der Einsatz in kritischen Bereichen, insbesondere Explosions-geschützten Bereichen, problemloser als bei den bekannten Dreheinrichtungen, da es durch den fast berührungslosen Antrieb nicht zu Reibungshitze oder zu Funkenentwicklung durch aufeinander stoßende Metallteile, beispielsweise Zahnräder auf Ketten, kommt. Durch den Reibschluss ist ein besonders sanfter, ruckfreier aber dennoch kontrollierter Antrieb für die Drehbewegung der spindelförmigen Elemente realisierbar. Ferner ermöglicht die modulare Verwendung von einzelnen Antriebsreibkörpern eine einfache Anpassung an den Gesamtaufbau der Vorrichtung. Der Förderer kann an den Bewegungsweg, nämlich seinen Verlauf und/oder seine Länge, optimal und flexibel angepaßt werden. Auch können zur Realisierung des Reibungskontakts erforderliche Zug- oder Druckkräfte im Vergleich zu andersartigen bekannten Dreheinrichtungen gering gehalten werden, was sich günstig bei für derartige Förderer verhältnismäßig langen Bewegungswegen auswirkt.

Bei einer vorteilhaften Ausführungsform verläuft die Symmetrieachse der Antriebsreibfläche zur Spindeldrehachse geneigt, insbesondere rechtwinklig zur Spindeldrehachse. Eine zueinander rechtwinklige Anordnung der Achsen wirkt sich besonders positiv auf die Gleichmäßigkeit der Drehung der spindelförmigen Elemente aus.

Um einen kompakten Aufbau des gesamten Förderers inklusive der Dreheinrichtung zu ermöglichen, kann die Symmetrieachse der Antriebsreibfläche unterhalb der Spindelreibfläche verlaufen. Auf diese Weise unterstützt die Schwerkraft den Anpressdruck der Spindelreibfläche gegen die Antriebsreibfläche, so dass der Aufwand an zusätzlichen Mitteln zur Anpassung des Anpressdrucks gering gehalten werden können.

Ferner können der Spindelreibkörper und/oder der Antriebsreibkörper gerade Kreiskegelformen haben, insbesondere können diese flache Kreiskegelstümpfe sein, und die Kegelmantelflächen können die Spindelreibfläche beziehungsweise die Antriebsreibfläche bilden. Kreiskegel beziehungsweise Kreiskegelstümpfe sind außerdem einfach realisierbare Rotationskörper.

Vorteilhafterweise können die Antriebsreibfläche und/oder die Spindelreibfläche im Axialschnitt zur jeweiligen Symmetrieachse hin betrachtet konvex geformt sein. Die Durchmesser der Antriebsreibfläche und der Spindelreibfläche können auf diese Weise unterschiedlich sein, ohne dass daraus resultierende unterschiedliche Umfangsgeschwindigkeiten der Reibflächen zu Verschleiß führen. Die beiden Reibflächen haben im Idealfall nur einen punktförmigen, zumindest aber kleinflächigen Kontakt, so dass der Verschleiß deutlich reduziert wird.

Zweckmäßigerweise können die Antriebsreibfläche und die Spindelreibfläche aus einer verschleißfesten Materialkombination, insbesondere Holz, Leder, Gummi, Gewebe, Kunststoff und/oder Metall, sein, die geeignet ist, einen Kraftschluss zwischen der Antriebsreibfläche und der Spindelreibfläche zu realisieren, der ein Drehen oder Anhalten der spindelförmigen Elemente ermöglicht. So wird eine gleichmäßige Drehung der spindelförmigen Elemente auch bei einem geringen Anpressdruck gewährleistet. Durch die Verschleißfestigkeit werden die Standzeiten optimiert.

Um den Anpressdruck optimal einstellen zu können, und auf diese Weise sowohl eine gleichmäßige Drehung als auch einen minimalen Verschleiß zu erreichen, kann eine Justageeinrichtung mit einem elastischen Element, insbesondere einer Schraubenfeder, vorgesehen sein, die geeignet ist, den Anpressdruck der Antriebsreibfläche auf die Spindelreibfläche einzustellen. Die Anpresskraft der Antriebsreibfläche gegen die Spindelreibfläche kann auf diese Weise so eingestellt werden, dass ein schlupffreier Antrieb der spindelförmigen Elemente gewährleistet wird, wobei etwaige Querkräfte auf das sich bewegende Förderorgan minimal gehalten werden können.

Bei einer weiteren vorteilhaften Ausführungsform weist die Dreheinrichtung entlang des Bewegungsweges eine Vielzahl von Antriebsreibkörpern auf. So können die spindelförmigen Elemente entlang des Bewegungswegs an unterschiedlichen Orten gedreht werden.

Um die Antriebsreibkörper einfach gruppenweise unterschiedlich, insbesondere in unterschiedlichem Drehsinn und/oder unterschiedlicher Drehgeschwindigkeit anzutreiben, können bei einer weiteren vorteilhaften Ausführungsform die Antriebsreibkörper in wenigstens zwei Gruppen zusammengefasst sein, wobei in jeder Gruppe die Antriebskörper gemeinsam antreibbar sind.

Vorteilhafterweise können die Gruppen gegeneinander versetzt entlang des Bewegungsweges angeordnet sein, so dass ein Antriebskörper der ersten Gruppe einem Antriebskörper der zweiten Gruppe folgt. Die spindelförmigen Elemente können so entlang des Bewegungsweges abwechselnd mit den Antriebscharakteristiken der beiden Gruppen angetrieben werden.

Die Antriebsreibkörper und die spindelförmigen Elemente können ferner äquidistant entlang des Bewegungsweges angeordnet sein.

Bei einer weiteren vorteilhaften Ausführungsform sind die Antriebsreibkörper einseitig des Bewegungsweges angeordnet. Dies ist sehr platzsparend.

Alternativ können die Antriebsreibkörper beidseitig des Bewegungsweges angeordnet sein. Dies hat den Vorteil, dass entsprechende separate Antriebsmittel für die unterschiedlichen Gruppen einfach jeweils auf der Seite der jeweiligen Gruppe angeordnet werden können und entsprechende Kraftübertragungsmittel zu den Antriebsreibkörpern, beispielsweise Riemen, geradlinig geführt werden können, ohne dass zusätzliche Umlenkrollen erforderlich sind.

Vorteilhafterweise ist wenigstens ein Antriebsmittel vorgesehen, das geeignet ist, über wenigstens einen Antriebsriemen den Antriebsreibkörper, insbesondere eine Gruppe von Antriebsreibkörpern, zu drehen oder anzuhalten. Ein Antriebsriemen kann einfach parallel zum Förderorgan verlaufen und auf diese Weise eine Vielzahl von Antriebsreibkörpern gruppenweise synchron antreiben. Als Antriebsriemen kann ein Flach- oder Zahnriemen verwendet werden. Antriebsriemen haben gegenüber Ketten den Vorteil, dass sie in gewissem Umfang elastisch sind, so dass Lastwechsel weicher stattfinden. Im Übrigen können Antriebsriemen auch in Explosions-geschützten Bereichen verwendet werden, da keine metallischen Teile aufeinander stoßen und so auch keine Funken entstehen. Die Antriebsriemen können mit Antriebsmotoren angetrieben werden, welche sich vorzugsweise außerhalb eines Explosions-geschützten Bereichs, insbesondere einer Kabine, befinden.

Vorteilhafterweise kann das Antriebsmittel für die Antriebsreibkörper mit einer Steuerungseinrichtung steuerbar verbunden sein, die geeignet ist, das Antriebsmittel und das Förderorgan aufeinander abgestimmt zu betreiben. Auf diese Weise können die spindelförmigen Elemente jeweils beim Erreichen einer der Antriebsreibkörper zuverlässig und kontrolliert gedreht werden.

Bei einer weiteren besonders vorteilhaften Ausführungsform weisen die spindelförmigen Elemente jeweils ein fest mit dem Förderorgan verbundenes Teil, insbesondere einen Spindelstock, und ein um dieses drehbar gelagertes Teil, insbesondere eine Spindelwelle, auf und der Spindelreibkörper ist drehschlüssig an dem drehbar gelagerten Teil befestigt. Der einfache Aufbau der spindelförmigen Elemente mit wenigen Bauteilen ermöglicht eine schnelle Montage mit einem geringen Justageaufwand und einen zuverlässigen, wartungsarmen Betrieb. Außerdem können die Radien des Spindelreibkörpers und des Antriebsreibkörpers bei diesem Aufbau verhältnismäßig groß gewählt werden, was sich günstig auf den Verschleiß auswirkt.

Vorteilhafterweise können das Förderorgan und/oder das Antriebsmittel für die Antriebsreibkörper getaktet laufen. Dies hat den Vorteil, dass die Vorrichtung für getaktet ablaufende Behandlungen, beispielsweise beim Einsatz von entlang des Bewegungsweges angeordneten Behandlungsstationen, einsetzbar ist. Das Förderorgan kann so einfach mit einer konstanten Taktfrequenz betrieben werden, die so an die Fördergeschwindigkeit angepaßt ist, dass die bei einem Fördertakt von den spindelförmigen Elementen zurückgelegte Wegstrecke dem Abstand der Antriebsreibkörper entspricht.

Ein Ausführungsbeispiel der Erfindung wird nachfolgend anhand der Zeichnung näher erläutert; es zeigen
- Figur 1: schematisch eine isometrische Darstellung eines Förderers für Fahrzeugräder mit beidseitig des Bewegungswegs angeordneten Drehstationen für Spindeln zum Auflegen der Fahrzeugräder;
- Figur 2: schematisch eine Seitenansicht des Förderers aus Figur 1;
- Figur 3: schematisch eine Ansicht des Förderers aus den Figuren 1 und 2 senkrecht zum Bewegungsweg;
- Figur 4: schematisch einen horizontalen Schnitt des Förderers aus den Figuren 1 bis 3 unterhalb der Fahrzeugräder;
- Figur 5: schematisch eine Ansicht des Förderers aus den Figuren 1 bis 4 senkrecht zum Bewegungsweg, wobei hier nur ein Antriebsmotor für die Drehstationen auf einer Seite des Bewegungsweges und ein Teil einer der Drehstationen mit einer Spindel gezeigt sind;
- Figur 6: eine Detailansicht des Antriebsmotors, der Drehstation und der Spindel aus Figur 5;
- Figur 7: schematisch eine Detailansicht einer der Drehstationen und einer der Spindeln aus den Figuren 1 bis 4 senkrecht zum Bewegungsweg;
- Figur 8: eine Detailansicht einer der Drehstationen und einer der Spindeln aus den Figuren 1 bis 4 in einem horizontalen Schnitt unterhalb des Fahrzeugrades;

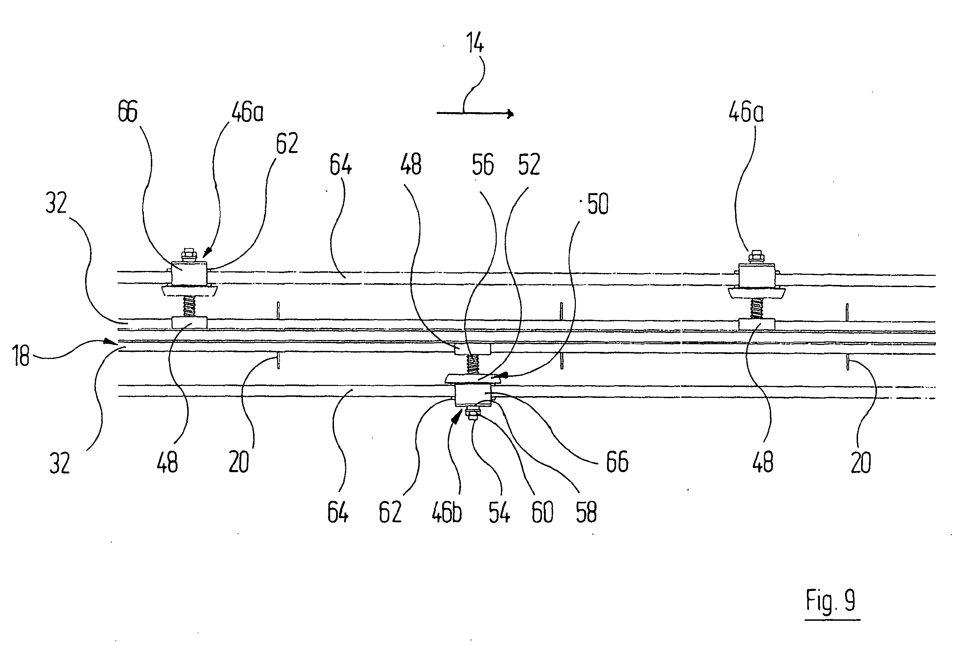

- Figur 9: schematisch einen Ausschnitt des Förderers aus den Figuren 1 bis 4 in Draufsicht, hier ohne Spindeln.

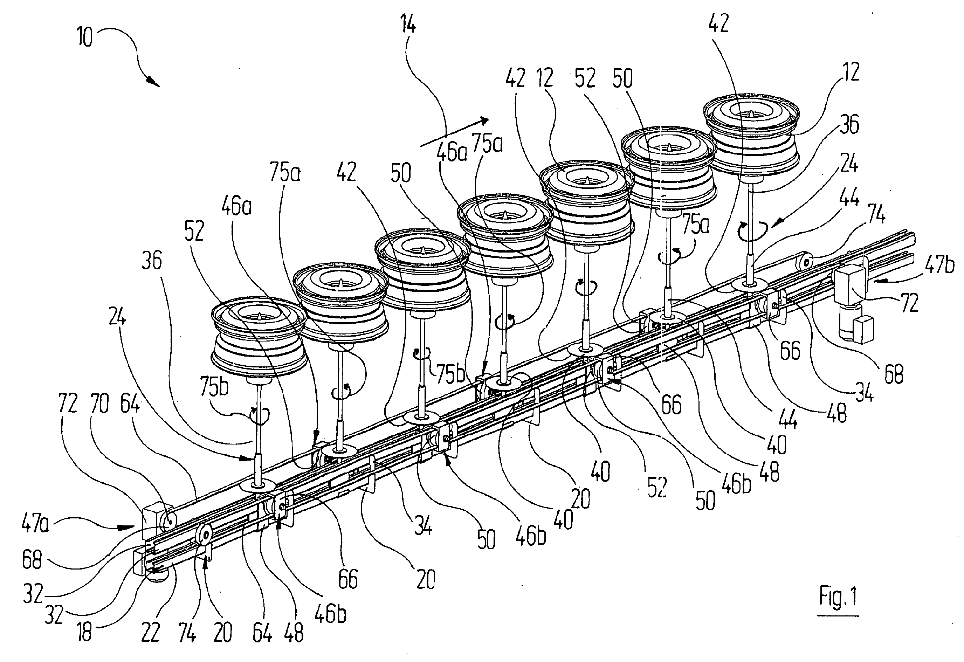

In Figur 1 ist schematisch eine isometrische Darstellung eines insgesamt mit dem Bezugszeichen 10 versehenen Förderers einer ansonsten nicht dargestellten Vorrichtung zur Behandlung von Fahrzeugrädern 12 im Rahmen einer Pulverlackierung gezeigt. Der Förderer 10 führt die Fahrzeugräder 12 entlang eines Bewegungsweges in Richtung eines Pfeils 14 (Bewegungsrichtung 14) durch die Vorrichtung.

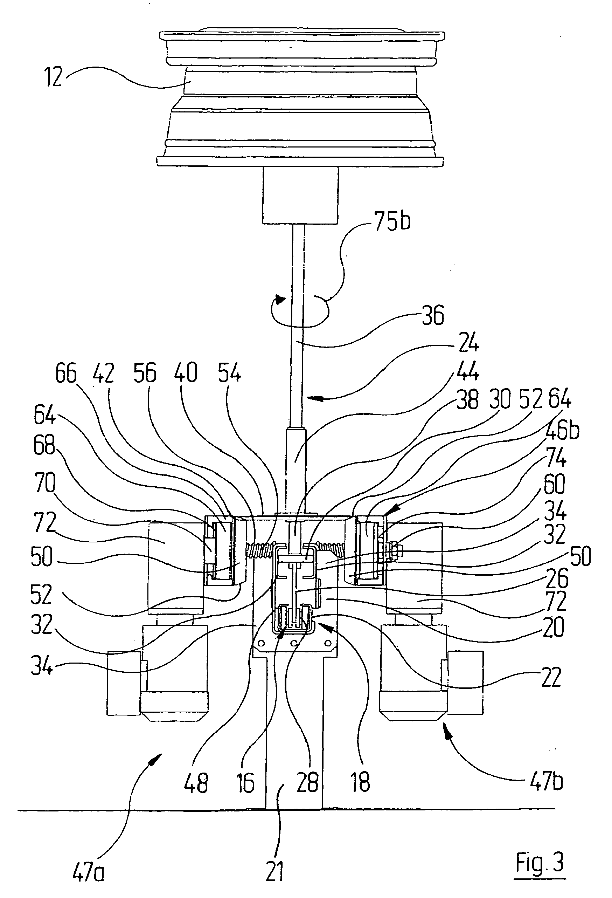

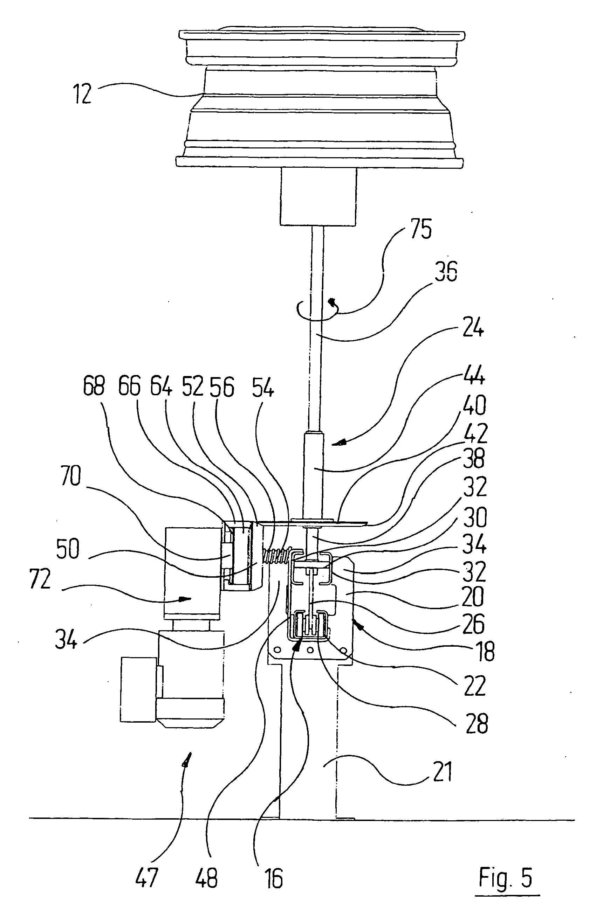

Der Förderer 10 umfasst eine in den Figuren 3 und 5 bis 7 in einem vertikalen Schnitt senkrecht zur Bewegungsrichtung 14 gezeigte horizontal verlaufende Endloslaschenkette 16 eines sich bewegenden Förderorgans 18. Die Endloslaschenkette 16 verläuft durch Haltelaschen 20, die in Bewegungsrichtung 14 hintereinander an einem Gestell 21 befestigt sind und ein etwa U-förmiges, im vertikalen Querschnitt nach oben offenes Profil haben. Die Haltelaschen 20 tragen an der Basis des "U", in den Figuren 3 und 5 bis 7 unten, eine nach oben offene Kettenführung 22 mit ebenfalls einem U-förmigen Profil, in der die Endloslaschenkette 16 geführt ist. Die Endloslaschenkette 16 ist über eine nicht dargestellte Antriebseinrichtung in Bewegungsrichtung 14 angetrieben.

An der Endloslaschenkette 16 ist eine Vielzahl von im Wesentlichen identischen Spindeln 24 zur Aufnahme der Fahrzeugräder 12 befestigt.

Die Spindeln 24 weisen jeweils einen in den Figuren 3 und 5 bis 7 gezeigten kreiszylinderförmigen Spindelstock 26 auf, dessen Achse eine Spindeldrehachse bildet. Das in den Figuren 3 und 5 bis 7 untere Ende des Spindelstocks 26 ist so an einem Bolzen 28 der Endloslaschenkette 16 befestigt, dass die Achse des Spindelstocks 26 senkrecht auf der Achse des Bolzens 28 steht. Das der Endloslaschenkette 16 abgewandte Ende des Spindelstocks 26 ist über eine Führungsrolle 30 in einer Doppel-C-Profilführung 32 geführt, welche zwischen den Schenkeln 34 der U-förmigen Haltelaschen 20 fest fixiert ist.

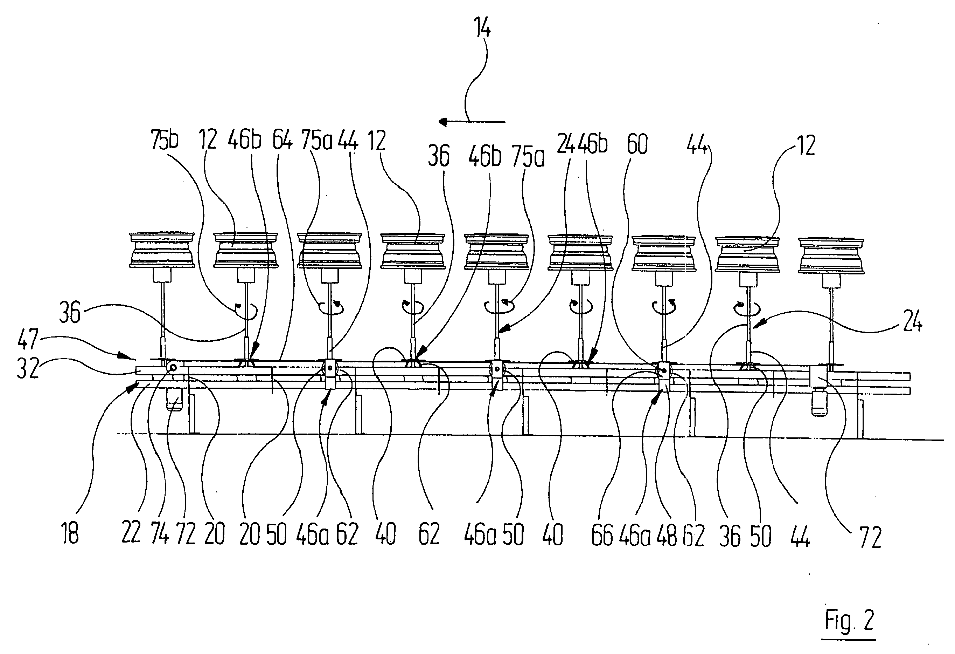

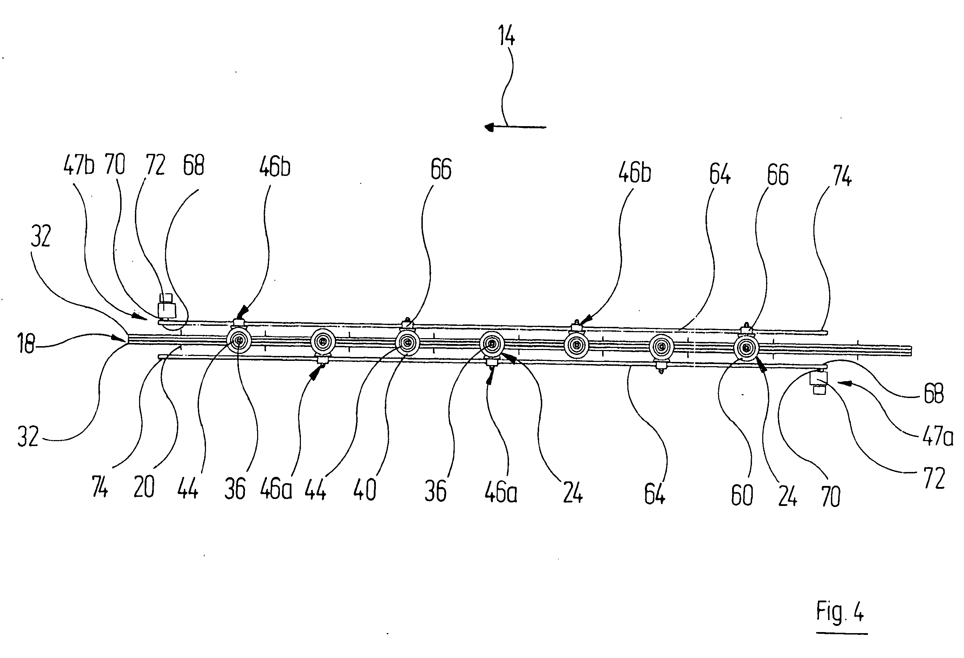

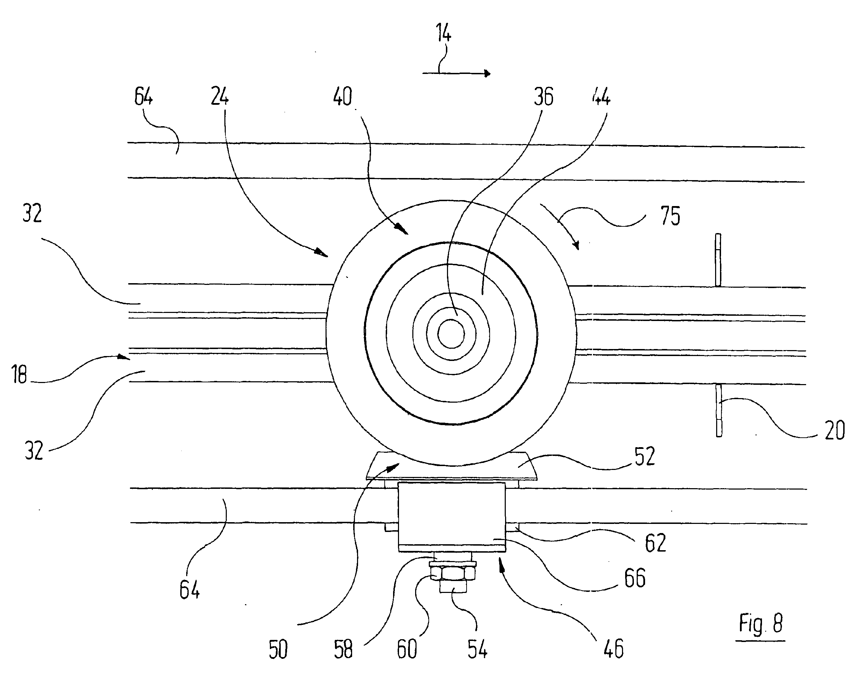

Außerdem ist auf dem der Endloslaschenkette 16 abgewandten Ende des Spindelstocks 26 eine in den Figuren 1 bis 5 und 8 gezeigte Spindelwelle 36 der Spindel 24 koaxial zur Spindeldrehachse in einer Lagerung 38, die in den Figuren 3 und 5 bis 7 gezeigt ist, drehbar gelagert.

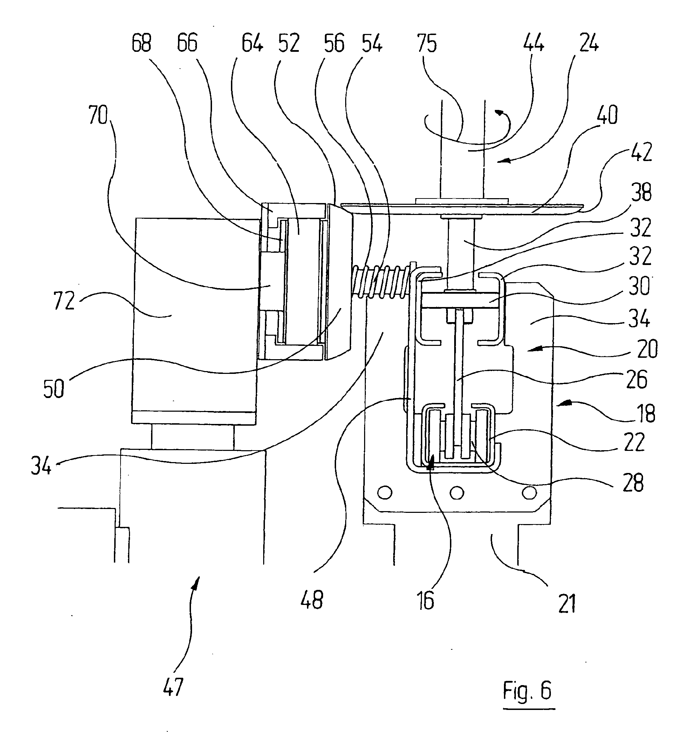

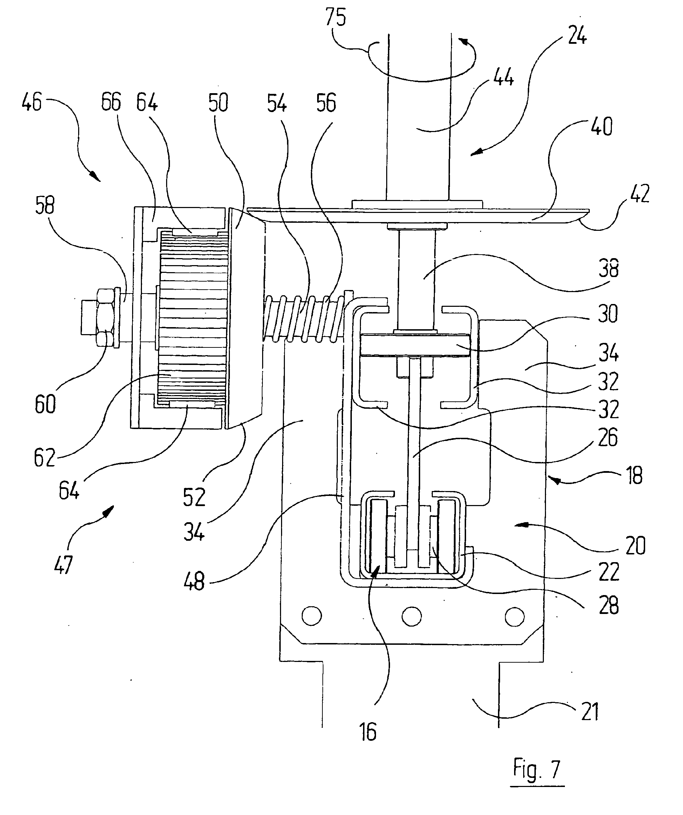

Eine Spindelreibscheibe 40 aus Metall hat die Form eines geraden flachen Kreiskegelstumpfes, dessen Mantelfläche (Spindelreibfläche 42) ballig geformt, nämlich im Axialschnitt zu seiner Symmetrieachse hin betrachtet konvex und zur Symmetrieachse rotationssymmetrisch ist, was in den Figuren 6 und 7 deutlich gezeigt ist. Die kleine Stirnfläche des Kreiskegelstumpfes ist der Endloslaschenkette 16 zugewandt.

Die Spindelreibscheibe 40 weist koaxial zu ihrer Symmetrieachse eine durchgängige kreiszylindrische Öffnung auf. Durch diese Öffnung ist fest fixiert eine rohrförmige Hülse 44 gesteckt, derart, dass die Achse der Hülse 44 senkrecht zu den Stirnflächen der Spindelreibscheibe 40 verläuft und eine ihrer Stirnflächen etwa mit deren kleiner Stirnfläche abschließt. Der Innendurchmesser der Hülse 44 ist etwas größer als der Außendurchmesser der Spindelwelle 36. Die Hülse 44 ist mit ihrem die Spindelreibscheibe 40 aufnehmenden Ende dem Spindelstock 26 zugewandt auf die Spindelwelle 36 gesteckt und über eine Pressverbindung auf der Spindelwelle 36 befestigt. Die Spindelreibfläche 42 ist so rotationssymmetrisch zur Spindeldrehachse. Außerdem sitzt die Spindelreibscheibe 40 nahe dem Förderorgan 18, was den Einfluss von horizontalen Kräften beispielsweise beim Anfahren oder Abstoppen des Förderorgans 18 auf sie minimiert.

Der dem Spindelstock 26 abgewandte Bereich der Spindelwelle 36 kann mit einer nicht dargestellten Gleichlaufeinrichtung entlang des Bewegungsweges geführt werden.

Das Fahrzeugrad 12 ist koaxial oben auf einem im Durchmesser vergrößerten Endbereich der Spindelwelle 36 angeordnet.

Um die Spindelwellen 36 und damit die Fahrzeugräder 12 zu drehen beziehungsweise eine Drehung derselben zu stoppen, weist der Förderer 10 eine Vielzahl von identischen Drehstationen 46 zweier Dreheinrichtungen 47a, 47b auf. Die Drehstationen 46 sind in zwei Gruppen beidseitig äquidistant entlang der Endloslaschenkette 16 angeordnet. Die Teilung entspricht den Abständen der Spindeln 24 auf der Endloslaschenkette 16. In den Figuren und in der Beschreibung sind dort, wo es der besseren Unterscheidbarkeit der beiden Gruppen dient, die Drehstationen mit 46a beziehungsweise 46b bezeichnet. Im Aufbau sind sie jedoch identisch.

Jede Drehstation 46 ist mit einem L-förmigen Halteprofil 48 an dem Doppel-C-Profil 32 und der Kettenführung 22 der Endloslaschenkette 16 befestigt. Der lange Schenkel des "L" verläuft dabei vertikal neben der Endloslaschenkette 16 und umgreift mit seinem nach innen gebogenen oberen Rand das Doppel-C-Profil 32 flächig anliegend. Der kurze Schenkel verläuft horizontal unterhalb der Kettenführung 22 und liegt an dieser flächig an. Sein freier Rand ist nach oben gebogen.

Jede Drehstation 46 weist eine Antriebsreibscheibe 50 auf. Die Antriebsreibscheibe 50 hat die Form eines geraden flachen Kreiskegelstumpfes, dessen Mantelfläche (Antriebsreibfläche 52) ballig geformt, nämlich im Axialschnitt zu seiner Symmetrieachse hin betrachtet konvex und zur Symmetrieachse rotationssymmetrisch ist. Die kleine Stirnfläche des Kreiskegelstumpfes zeigt zu dem Förderorgan 18. Dies ist in den Figuren 6 und 7 gezeigt.

Die Antriebsreibscheibe 50 ist um ihre Symmetrieachse drehbar auf einem Achsstummel 54 gelagert. Ein Ende des Achsstummels 54 ist drehfest an dem vertikalen Schenkel des Halteprofils 48 etwa auf der Höhe des Doppel-C-Profils 32 befestigt. Die Achse des Achsstummels 54 und damit auch die Symmetrieachse der Antriebsreibfläche 52 verläuft senkrecht zur Spindeldrehachse und damit zur Symmetrieachse der Spindelreibfläche 42.

Der Achsstummel 54 befindet sich unterhalb der Spindelreibscheibe 40, so dass die Antriebsreibfläche 52 von schräg unten an der Spindelreibfläche 42 derjenigen Spindel 24 angreift, die der Drehstation 46 gerade zugeordnet ist. Die Antriebsreibscheibe 50 ist so angeordnet, dass ihre Antriebsreibfläche 52 an der Spindelreibfläche 42 idealerweise an einem Berührungspunkt oder einer möglichst kleinen Berührungsfläche anliegt und unter Reibungskontakt an dieser abrollen kann.

Wenn sich die Spindeln 24 in Bereichen zwischen den Drehstationen 46 befinden, haben die Spindelreibflächen 42 und die Antriebsreibflächen 52 hingegen keinen Kontakt, so dass dort keine Kräfte von den Drehstationen 46 auf die Spindeln 24 einwirken.

Auf dem Achsstummel 54 befindet sich ferner eine vorgespannte Schraubenfeder 56, welche an einem Ende an dem Halteprofil 48 anliegt und an ihrem anderen Ende gegen eine Lagerhülse 58 drückt. Dies ist in der Figur 7 gezeigt.

Diese gegenüber dem Achsstummel 54 drehfeste Lagerhülse 58 reicht auf der dem Halteprofil 48 gegenüberliegenden Seite der Schraubenfeder 56 bis fast zum freien Ende des Achsstummels 54 (vgl. Figur 7). Die Antriebsreibscheibe 50 ist auf dem der Schraubenfeder 56 zugewandten Bereich der Lagerhülse 58 drehbar gelagert.

Der Achsstummel 54 weist im Bereich seines freien Endes ein Außengewinde auf, auf das eine Einstellmutter 60 aufgeschraubt ist. Die Einstellmutter 60 wirkt als Widerlager für die Lagerhülse 58. Durch Drehen der Einstellmutter 60 kann die Lagerhülse 58 und damit die Antriebsreibscheibe 50 auf dem Achsstummel 54 in axialer Richtung verschoben werden. Dabei wird die Lagerhülse 58 unter Spannung zwischen der Schraubenfeder 56 und der Einstellmutter 60 gehalten. Durch Verändern der axialen Position der Antriebsreibscheibe 50 wird der Anpressdruck der Antriebsreibfläche 52 auf die Spindelreibfläche 42 verändert und kann so optimal eingestellt werden, um einen Schlupf zu verhindern und Querkräfte auf die Spindel 24 und damit auf das Förderorgan 18 zu minimieren.

Auf der Lagerhülse 58 ist außerdem eine Riemenscheibe 62 eines Riemenantriebs gelagert, die drehfest mit der Antriebsreibscheibe 50 verbunden ist.

Auf zwei gegenüberliegenden Umfangsseiten der Riemenscheibe 62, in der Figur 7 oben und unten, liegen kraftschlüssig die entsprechenden Trume eines Endlosantriebsriemens 64 in Form eines Zahnriemens an. Mit dem Endlosantriebsriemen 64 können die Riemenscheibe 62 und damit die Antriebsreibscheibe 50 angetrieben und angehalten werden.

Auf der Lagerhülse 58 ist darüber hinaus ein etwa U-förmiges Antriebsriemenführungsprofil 66 befestigt, das mit seiner offenen Seite zur Antriebsreibscheibe 50 zeigt und die Riemenscheibe 62 und den Endlosantriebsriemen 64 mit seinen Schenkeln, in Figur 7 oben und unten, umgreift.

Durch die Basisplatte auf der geschlossenen, vertikalen Seite des Antriebsriemenführungsprofils 66 führt mittig die Lagerhülse 58 hindurch, auf der das Antriebsriemenführungsprofil 66 drehfest fixiert und mit dieser auf dem Achsstummel 54 in axialer Richtung verschiebbar ist. Die Basisplatte des Antriebsriemenführungsprofils 66 befindet sich zwischen der Riemenscheibe 62 und der Einstellmutter 60.

Bei der in Bewegungsrichtung 14 von oben betrachtet linken Gruppe von Drehstationen 46a befindet sich in Bewegungsrichtung 14 vor der ersten Drehstation 46a eine in den Figuren 1 und 3 bis 6 gezeigte Antriebsscheibe 68 für den Endlosantriebsriemen 64. Die Antriebsscheibe 68 ist auf einer Antriebswelle 70 befestigt, deren Achse parallel zu den Achsen der Achsstummel 54 verläuft.

Die Antriebswelle 70 ist Teil eines Antriebsmotors 72 für den Antriebsriemen 64. Der Antriebsmotor 72 befindet sich seitlich unterhalb des Weges, den die Spindelreibscheiben 40 nehmen. Er ist über ein nicht gezeigtes Gestell am Boden befestigt.

Hinter der in Bewegungsrichtung 14 letzten Drehstation 46a ist eine in Figur 1 gezeigte Umlenkscheibe 74 für den Endlosantriebsriemen 64 angeordnet, die ebenfalls um eine parallel zu den Achsen der Achsstummel 54 verlaufende Achse drehbar gelagert ist.

Die Riemenscheiben 62, die Antriebsscheibe 68 und die Umlenkscheibe 74 haben den gleichen Durchmesser und ihre Achsen befinden sich auf der gleiche Höhe, so dass ihre Umfangsseiten in Bewegungsrichtung 14 betrachtet fluchten. Auf diese Weise verläuft der obere Trum des Endlosantriebsriemens 64 parallel zum unteren Trum und beide Trums liegen gleichermaßen kraftschlüssig an allen Riemenscheiben 62 an.

Aufgrund dieses Aufbaus des Riemenantriebs können einzelne Drehstationen 46 einfach beispielsweise zu Wartungszwecken ausgebaut werden, ohne dass die Funktion der verbleibenden Drehstationen 46 dadurch beeinträchtigt wird.

Bei der in Bewegungsrichtung 14 betrachtet rechten Gruppe von Drehstationen 46b befindet sich der Antriebsmotor 72 mit der Antriebsscheibe 68 hinter der in Bewegungsrichtung 14 letzten Drehstation 46b. Die Umlenkscheibe 74 hingegen ist vor der ersten Drehstation 46b. Ansonsten sind die linke und die rechte Gruppe von Drehstationen 46 identisch aufgebaut.

Die Drehstationen 46 der beiden Gruppen sind abwechselnd gegeneinander versetzt entlang des Bewegungsweges angeordnet. Abwechselnd bedeutet, dass in Bewegungsrichtung 14 einer Drehstation 46a der linken Gruppe eine Drehstation 46b der rechten Gruppe und sodann wieder eine Drehstation 46a der linken Gruppe folgt und so weiter, wobei die Drehstationen 46a der einen Seite in Bewegungsrichtung gesehen in der Mitte zwischen den Drehstationen 46b der anderen Seite liegen.

Alle Antriebsreibscheiben 50 aus einer Gruppe von Drehstationen 46 und mit ihnen die jeweiligen Spindelreibscheiben 40, die Spindelwellen 36 und die Fahrzeugräder 12 werden über den entsprechenden Endlosantriebsriemen 64 mit dem Antriebsmotor 72 synchron im gleichen Drehsinn angetrieben.

Die linke Gruppe von Drehstationen 46a wird dabei so angetrieben, dass die entsprechenden Spindelwellen 36 von oben betrachtet im Uhrzeigersinn gedreht werden. Die Drehrichtung ist in den Figuren 1 bis 3 und 5 bis 8 durch Pfeile 75 angedeutet, die dort, wo es zur besseren Unterscheidung der Drehrichtungen sinnvoll ist, mit 75a beziehungsweise 75b bezeichnet sind.

Das Förderorgan 18 und die Dreheinrichtung 47 sind mit einer nicht gezeigten Abdeckung nach oben vor Schmutz, beispielsweise Lackpulver, geschützt, welche eine spaltförmige Öffnung mit einer Lamellendichtung für die Spindelwellen 36 aufweist, die sich parallel zur Endloslaschenkette 16 erstreckt. Der beim Durchfahren einer Spindelwelle 36 sich öffnende Bereich der Lamellendichtung wird dabei von der darunterliegenden Spindelreibscheibe 40 überlappt, die etwaigen durchfallenden Schmutz auffängt. Auf diese Weise werden die Spindelreibfläche 42 und die Antriebsreibfläche 52 der unterhalb der Spindelreibscheibe 40 angeordneten Antriebsreibscheibe 50 vor Schmutz geschützt.

Im Übrigen wird der Antrieb der Endloslaschenkette 16 mit einer nicht gezeigten Steuereinrichtung angesteuert. Die Endloslaschenkette 16 läuft getaktet und bewegt die Spindeln 24 in Bewegungsrichtung 14 an den Drehstationen 46 entlang, wobei die Endloslaschenkette 16 nach jedem Fördertakt gestoppt wird, wenn die Spindelreibscheiben 40 an einer Antriebsreibscheibe 50 anliegen. Die während eines Fördertaktes zurückgelegte Strecke entspricht dem Abstand der Drehstationen 46.

Im Betrieb treiben die beiden Gruppen von Drehstationen 46 die Antriebsreibscheiben 50 über die Endlosantriebsriemen 64 und die Riemenscheiben 62 so an, dass sich die Antriebsreibscheiben 50 der beiden Gruppen die Spindelreibscheiben 40 und die Spindelwellen 36 der aufeinander folgenden Spindeln 24 abwechselnd in entgegengesetztem Drehsinn drehen. Auf diese Weise wird der Drehsinn jeder Spindel 24 bei jedem Taktstopp umgekehrt.

Statt für Fahrzeugräder 12 kann die Vorrichtung auch zur Behandlung von anderen Werkstücken eingesetzt werden. Auch ist ihr Einsatz nicht beschränkt auf Pulverlackierungen.

Die Drehstationen 46 können auch in anderer Weise, beispielsweise in unterschiedlichen Abständen und/oder nur auf einer Seite des Förderorgans 18 angeordnet sein.

Die Drehstationen 46 können auch in mehr oder weniger als zwei Gruppen untereinander verbunden sein. Sie können beispielsweise separat angetrieben mit der Steuereinrichtung gesteuert werden.

Die Spindeln 24 aller Gruppen können auch im gleichen Drehsinn gedreht und/oder mit unterschiedlicher auch zeitlich variierender Drehzahlen gedreht werden.

Die Antriebsreibscheiben 50 können statt mit dem Riemenantrieb auch mit einem anderen Antriebsmittel angetrieben werden.

Die Spindelreibflächen 42 und/oder die Antriebsreibflächen 52 können statt aus Metall auch aus einem anderen verschleißfesten Material, insbesondere aus Holz, Leder, Gummi, Gewebe oder Kunststoff, sein, das geeignet ist, einen Kraftschluss zwischen den Spindelreibflächen 42 und den Antriebsreibflächen 52 herzustellen, der ein Drehen oder Anhalten der Spindeln 24 ermöglicht. Die Spindelreibflächen 42 und/oder die Antriebsreibflächen 52 können auch lediglich als Schicht aus einem der obigen Materialien auf einem Kern aufgebracht sein.

Die Spindelreibflächen 42 und/oder die Antriebsreibflächen 52 können statt ballig geformt auch im Axialschnitt gesehen gerade sein. Sie können auch eine andere rotationssymmetrische Form, beispielsweise die Oberfläche eines Torus oder eines Tonnenkörpers, haben.

Die Durchmesser der Spindelreibflächen 42 und der Antriebsreibflächen 52 und/oder deren Neigungen bezüglich ihrer jeweiligen Rotationssymmetrieachsen können gleich oder unterschiedlich sein.

Die Antriebsreibscheiben 50 können statt von der dem Förderorgan 18 zugewandten Seite auch von der dem Förderorgan 18 abgewandten Stirnseite, also von oben an den Spindelreibscheiben 40 angreifen. In diesem Fall zeigen die kleinen Stirnseiten der Spindelreibscheiben 40 nach oben.

Die Achsen der Antriebsreibscheiben 50 können statt horizontal auch geneigt sein.

Die Spindelreibscheiben 40 können statt mit der Pressverbindung auch in anderer Weise drehschlüssig an beziehungsweise auf den Spindelwellen 16 befestigt sein.

Die Antriebsmotoren 72 können statt am Boden auch am Gestell 21 des Förderorgans 18 befestigt sein.

Die Drehstationen 46 können statt an dem Doppel-C-Profil 32 und der Kettenführung 22 am Boden oder am Gestell 21 des Förderorgans 18 befestigt sein.

Statt der Endloslaschenkette 16 kann auch ein andersartiges bewegliches Teil eines Förderorgans, beispielsweise ein Endlosband, vorgesehen sein.

Anstelle der Zahnriemen können auch andersartige Endlosantriebsriemen, beispielsweise flache Antriebsriemen, verwendet werden.

Die Elektromotoren 74 können innerhalb oder außerhalb einer Kabine, vorzugsweise in der Nähe des Eingangs beziehungsweise des Ausgangs, angeordnet sein, durch die das Förderorgan 18 führt. Bei der Verwendung des Förderers 10 in einem Explosions-geschützten Bereich werden die Elektromotoren 74 bevorzugt außerhalb des Explosions-geschützten Bereichs angeordnet.

Die Antriebsmotoren 72 können statt im Dauerbetrieb auch bei jedem Fördertakt des Förderorgans 18 angehalten und bei jedem Taktstopp neu gestartet werden.

Das Förderorgan 18, insbesondere die Endloslaschenkette 16, kann statt horizontal auch zur Horizontalen geneigt verlaufen.

## Patentansprüche

1. Vorrichtung zur Behandlung von Werkstücken, insbesondere Fahrzeugrädern (12), insbesondere im Rahmen einer Pulverlackierung, mit einem Förderer (10), welcher die Werkstücke (12) entlang eines Bewegungsweges durch die Vorrichtung führt und ein sich bewegendes Förderorgan (18) umfasst, wobeidie Werkstücke (12) auf spindelförmigen Elementen (24) anordenbar sind, die an dem Förderorgan (18) befestigt und mittels einer Dreheinrichtung (47a, 47b) um ihre eigene Spindeldrehachse drehbar sind,
**dadurch gekennzeichnet, dass**
a) die spindelförmigen Elemente (24) jeweils wenigstens einen Spindelreibkörper (40) mit einer zur Spindeldrehachse rotationssymmetrischen Spindelreibfläche (42) aufweisen;
b) die Dreheinrichtung (47a, 47b) wenigstens einen Antriebsreibkörper (50) mit einer rotationssymmetrischen Antriebsreibfläche (52) umfasst, der um seine nicht mit der Spindeldrehachse zusammenfallenden Symmetrieachse der Antriebsreibfläche (52) motorisch drehbar angeordnet ist, wobei die Antriebsreibfläche (52) lokal an der Spindelreibfläche (42) unter Reibungskontakt anliegt.

2. Vorrichtung nach Anspruch 1, **dadurch gekennzeichnet,**
**dass** die Symmetrieachse der Antriebsreibfläche (52) zur Spindeldrehachse geneigt, insbesondere rechtwinklig zur Spindeldrehachse, verläuft.

3. Vorrichtung nach Anspruch 1 oder 2, **dadurch gekennzeichnet, dass** die Symmetrieachse der Antriebsreibfläche (52) unterhalb der Spindelreibfläche (42) verläuft.

4. Vorrichtung nach einem der vorhergehenden Ansprüche, **dadurch gekennzeichnet, dass** der Spindelreibkörper (40) und/oder der Antriebsreibkörper (50) gerade Kreiskegelformen haben, insbesondere flache Kreiskegelstümpfe sind, und die Kegelmantelflächen die Spindelreibfläche (42) beziehungsweise die Antriebsreibfläche (52) bilden.

5. Vorrichtung nach einem der vorhergehenden Ansprüche, **dadurch gekennzeichnet, dass** die Antriebsreibfläche (52) und/oder die Spindelreibfläche (42) im Axialschnitt zur jeweiligen Symmetrieachse hin betrachtet konvex geformt sind.

6. Vorrichtung nach einem der vorhergehenden Ansprüche, **dadurch gekennzeichnet, dass** die Antriebsreibfläche (52) und die Spindelreibfläche (42) aus einer verschleißfesten Materialkombination, insbesondere Holz, Leder, Gummi, Gewebe, Kunststoff und/oder Metall, ist, die geeignet ist, einen Kraftschluss zwischen der Antriebsreibfläche (52) und der Spindelreibfläche (42) zu realisieren, der ein Drehen oder Anhalten der spindelförmigen Elemente (24) ermöglicht.

7. Vorrichtung nach einem der vorhergehenden Ansprüche,
**gekennzeichnet durch** ein Justageeinrichtung (58, 60) mit einem elastischen Element, insbesondere einer Schraubenfeder (56), die geeignet ist, den Anpressdruck der Antriebsreibfläche (52) gegen die Spindelreibfläche (42) einzustellen.

8. Vorrichtung nach einem der vorhergehenden Ansprüche,
**dadurch gekennzeichnet, dass** die Dreheinrichtung (47a, 47b) entlang des Bewegungsweges eine Vielzahl von Antriebsreibkörpern (50) aufweist.

9. Vorrichtung nach Anspruch 8, **dadurch gekennzeichnet,**
**dass** die Antriebsreibkörper (50) in wenigstens zwei Gruppen zusammengefasst sind, wobei in jeder Gruppe die Antriebskörper (50) gemeinsam antreibbar sind.

10. Vorrichtung nach Anspruch 9, **dadurch gekennzeichnet,**
**dass** die Gruppen gegeneinander versetzt entlang des Bewegungsweges angeordnet sind, so dass ein Antriebskörper (50) der ersten Gruppe einem Antriebskörper (50) der zweiten Gruppe folgt.

11. Vorrichtung nach einem der Ansprüche 8 bis 10, da durch gekennzeichnet, dass die Antriebsreibkörper (50) und die spindelförmigen Elemente (24) äquidistant entlang des Bewegungsweges angeordnet sind.

12. Vorrichtung nach einem der Ansprüche 8 bis 11, **dadurch gekennzeichnet, dass** die Antriebsreibkörper einseitig des Bewegungsweges angeordnet sind.

13. Vorrichtung nach einem der Ansprüche 8 bis 11, **dadurch gekennzeichnet, dass** die Antriebsreibkörper (50) beidseitig des Bewegungsweges angeordnet sind.

14. Vorrichtung nach einem der vorhergehenden Ansprüche, **gekennzeichnet durch** wenigstens ein Antriebsmittel (72), das geeignet ist, über wenigstens einen Antriebsriemen (64) den Antriebsreibkörper (50), insbesondere eine Gruppe von Antriebsreibkörpern (50), zu drehen oder anzuhalten.

15. Vorrichtung nach einem der vorhergehenden Ansprüche,
**dadurch gekennzeichnet, dass** das Antriebsmittel (72) für die Antriebsreibkörper (50) mit einer Steuerungseinrichtung steuerbar verbunden ist, die geeignet ist, das Antriebsmittel (72) und das Förderorgan (18) aufeinander abgestimmt zu betreiben.

16. Vorrichtung nach einem der vorhergehenden Ansprüche,
**dadurch gekennzeichnet, dass** die spindelförmigen Elemente (24) jeweils ein fest mit dem Förderorgan (18) verbundenes Teil, insbesondere einen Spindelstock (26), und ein um dieses drehbar gelagertes Teil, insbesondere eine Spindelwelle (36), aufweisen und der Spindelreibkörper (40) drehschlüssig an dem drehbar gelagerten Teil (36) befestigt ist.

17. Vorrichtung nach einem der vorhergehenden Ansprüche,
**dadurch gekennzeichnet, dass** das Förderorgan (18) und/oder das Antriebsmittel (72) für die Antriebsreibkörper (50) getaktet laufen.

## Claims

1. A device for treating workpieces, particularly vehicle wheels (12), particularly within the context of powder coating, having a conveyor (10) which guides the workpieces (12) along a movement path through the device and comprises a moving conveyor member (18), wherein the workpieces (12) can be arranged on spindle-shaped elements (24) which are mounted on the conveyor member (18) and are rotatable about their own spindle axis of rotation by means of a rotating device (47a, 47b),
**characterised in that**
a) the spindle-shaped elements (24) each have at least one spindle friction body (40) having a spindle friction surface (42) which is rotationally symmetrical to the spindle axis of rotation;
b) the rotating device (47a, 47b) comprises at least one drive friction body (50) having a rotationally symmetrical drive friction surface (52) which is arranged such that it can be rotated by a motor about its axis of symmetry of the drive friction surface (52), which axis of symmetry does not coincide with the spindle axis of rotation, wherein the drive friction surface (52) abuts locally against the spindle friction surface (42) with friction contact.

2. A device according to Claim 1, **characterised in that** the axis of symmetry of the drive friction surface (52) extends at an angle to the spindle axis of rotation, in particular at a right angle to the spindle axis of rotation.

3. A device according to Claim 1 or 2, **characterised in that** the axis of symmetry of the drive friction surface (52) extends below the spindle friction surface (42).

4. A device according to one of the preceding claims, **characterised in that** the spindle friction body (40) and/or the drive friction body (50) are right circular cone shaped, are particularly flat circular truncated cones, and the cone lateral surfaces form the spindle friction surface (42) and the drive friction surface (52) respectively.

5. A device according to one of the preceding claims, **characterised in that** the drive friction surface (52) and/or the spindle friction surface (42) are convexly shaped as seen in axial section towards the respective axis of symmetry.

6. A device according to one of the preceding claims, **characterised in that** the drive friction surface (52) and the spindle friction surface (42) is made from a wear-resistant material combination, particularly wood, leather, rubber, fabric, plastic and/or metal, which is suitable for realising a force fit between the drive friction surface (52) and the spindle friction surface (42) which enables the spindle-shaped elements (24) to rotate or stop.

7. A device according to one of the preceding claims, **characterised by** an adjusting device (58, 60) having a resilient element, in particular a helical spring (56), which is suitable for setting the contact pressure of the drive friction surface (52) against the spindle friction surface (42).

8. A device according to one of the preceding claims, **characterised in that** the rotating device (47a, 47b) has a plurality of drive friction bodies (50) along the movement path.

9. A device according to Claim 8, **characterised in that** the drive friction bodies (50) are combined into at least two groups, wherein the drive bodies (50) in each group can be driven together.

10. A device according to Claim 9, **characterised in that** the groups are arranged offset from one another along the movement path so that a drive body (50) of the first group follows a drive body (50) of the second group.

11. A device according to one of Claims 8 to 10, **characterised in that** the drive friction bodies (50) and the spindle-shaped elements (24) are arranged equidistantly along the movement path.

12. A device according to one of Claims 8 to 11, **characterised in that** the drive friction bodies are arranged on one side of the movement path.

13. A device according to one of Claims 8 to 11, **characterised in that** the drive friction bodies (50) are arranged on both sides of the movement path.

14. A device according to one of the preceding claims, **characterised by** at least one drive means (72) which is suitable for rotating or stopping the drive friction body (50), in particular a group of drive friction bodies (50), by way of at least one drive belt (64).

15. A device according to one of the preceding claims, **characterised in that** the drive means (72) for the drive friction bodies (50) is controllably connected to a control device which is suitable for operating the drive means (72) and the conveyor member (18) such that they are synchronised with one another.

16. A device according to one of the preceding claims, **characterised in that** the spindle-shaped elements (24) each have a part which is fixedly connected to the conveyor member (18), particularly a headstock (26), and a part which is mounted to be rotatable about this, particularly a spindle shaft (36), and the spindle friction body (40) is secured to the rotatably mounted part (36) with rotational fit.

17. A device according to one of the preceding claims, **characterised in that** the conveyor member (18) and/or the drive means (72) for the drive friction bodies (50) operate in clocked mode.

## Revendications

1. Dispositif destiné au traitement de pièces se présentant notamment comme des roues (12) de véhicules, en particulier dans le cadre d'un laquage à la poudre, équipé d'un convoyeur (10) qui conduit lesdites pièces (12) à travers ledit dispositif, le long d'un trajet de mouvement, et est pourvu d'un organe de convoyage (18) en mouvement, lesdites pièces (12) pouvant être placées sur des éléments (24) en forme de broches, fixés audit organe de convoyage (18) et aptes à tourner autour de leur propre axe de rotation, au moyen d'un système (47a, 47b) de mise en rotation,
**caractérisé par le fait que**
a) les éléments (24) en forme de broches sont munis, respectivement, d'au moins un corps de frottement (40) doté d'une surface de frottement (42) à symétrie de révolution par rapport à l'axe de rotation des broches ;
b) le système (47a, 47b) de mise en rotation inclut au moins un corps (50) d'entraînement par friction qui est muni d'une surface (52) d'entraînement par friction, à symétrie de révolution, et est agencé à rotation motorisée autour de l'axe de symétrie de sa surface (52) d'entraînement par friction, ne coïncidant pas avec ledit axe de rotation des broches, ladite surface (52) d'entraînement par friction étant en applique contre ladite surface de frottement (42) desdites broches, de manière localisée, avec contact par frottement.

2. Dispositif selon la revendication 1, **caractérisé par le fait que** l'axe de symétrie de la surface (52) d'entraînement par friction s'étend avec inclinaison vis-à-vis de l'axe de rotation des broches, notamment à angle droit par rapport audit axe de rotation des broches.

3. Dispositif selon la revendication 1 ou 2, **caractérisé par le fait que** l'axe de symétrie de la surface (52) d'entraînement par friction s'étend au-dessous de la surface de frottement (42) des broches.

4. Dispositif selon l'une des revendications précédentes, **caractérisé par le fait que** le corps de frottement (40) des broches, et/ou le corps (50) d'entraînement par friction, possède(nt) des configurations en cônes circulaires droits et se présente(nt), en particulier, comme des troncs de cône circulaires aplatis, les surfaces des enveloppes tronconiques formant, respectivement, la surface de frottement (42) des broches ou la surface (52) d'entraînement par friction.

5. Dispositif selon l'une des revendications précédentes, **caractérisé par le fait que** la surface (52) d'entraînement par friction et/ou la surface de frottement (42) des broches possède(nt), en coupe axiale, une forme convexe considérée en direction de l'axe de symétrie respectif.

6. Dispositif selon l'une des revendications précédentes, **caractérisé par le fait que** la surface (52) d'entraînement par friction, et la surface de frottement (42) des broches, consistent en une combinaison de matériaux résistant à l'usure, en particulier du bois, du cuir, du caoutchouc, du tissu, une matière plastique et/ou un métal, appropriée pour instaurer, entre ladite surface (52) d'entraînement par friction et ladite surface de frottement (42) des broches, une interaction positive permettant une rotation ou une immobilisation des éléments (24) en forme de broches.

7. Dispositif selon l'une des revendications précédentes, **caractérisé par** un système de réglage (58, 60) doté d'un élément élastique, en particulier d'un ressort hélicoïdal (56), et apte à régler la pression de contact de la surface (52) d'entraînement par friction contre la surface de frottement (42) des broches.

8. Dispositif selon l'une des revendications précédentes, **caractérisé par le fait que** le système (47a, 47b) de mise en rotation comprend, le long du trajet de mouvement, une multiplicité de corps (50) d'entraînement par friction.

9. Dispositif selon la revendication 8, **caractérisé par le fait que** les corps (50) d'entraînement par friction sont rassemblés en au moins deux groupes, lesdits corps d'entraînement (50) pouvant être menés en commun dans chaque groupe.

10. Dispositif selon la revendication 9, **caractérisé par le fait que** les groupes sont agencés avec décalage l'un par rapport à l'autre, le long du trajet de mouvement, de façon telle qu'un corps d'entraînement (50) du premier groupe succède à un corps d'entraînement (50) du second groupe.

11. Dispositif selon l'une des revendications 8 à 10, **caractérisé par le fait que** les corps (50) d'entraînement par friction, et les éléments (24) en forme de broches, sont agencés avec équidistance le long du trajet de mouvement.

12. Dispositif selon l'une des revendications 8 à 11, **caractérisé par le fait que** les corps d'entraînement par friction sont situés d'un côté du trajet de mouvement.

13. Dispositif selon l'une des revendications 8 à 11, **caractérisé par le fait que** les corps (50) d'entraînement par friction sont situés de part et d'autre du trajet de mouvement.

14. Dispositif selon l'une des revendications précédentes, **caractérisé par** au moins un moyen d'entraînement (72) apte à faire tourner ou à immobiliser, par l'intermédiaire d'au moins une courroie d'entraînement (64), le corps (50) d'entraînement par friction et notamment un groupe de corps (50) d'entraînement par friction.

15. Dispositif selon l'une des revendications précédentes, **caractérisé par le fait que** le moyen d'entraînement (72), affecté aux corps (50) d'entraînement par friction, est en liaison de pilotage avec un système de commande apte à actionner ledit moyen d'entraînement (72), et l'organe de convoyage (18), avec coordination l'un vis-à-vis de l'autre.

16. Dispositif selon l'une des revendications précédentes, **caractérisé par le fait que** les éléments (24) en forme de broches comprennent respectivement une partie, notamment une poupée (26) reliée rigidement à l'organe de convoyage (18), et une partie, notamment un arbre (36) de broche monté(e) à rotation autour de la partie précitée, le corps de frottement (40) des broches étant fixé, avec solidarisation tournante, à ladite partie (36) montée à rotation.

17. Dispositif selon l'une des revendications précédentes, **caractérisé par le fait que** l'organe de convoyage (18), et/ou le moyen d'entraînement (72) affecté aux corps (50) d'entraînement par friction, fonctionne(nt) avec marche cadencée.
